# EUROPEAN PATENT APPLICATION

(11) **EP 4 428 987 A1**
(43) Date of publication of application: **11.09.2024**
(21) Application number: 23857584.9
(22) Date of filing: 24.07.2023
(51) Int. Cl.: H01M 10/48, H01M 50/673, H01M 50/627, H01M 10/6568, H01M 10/6556, H01M 10/613, H01M 10/63, A62C 3/16

(54) **BATTERY PACK WITH ENHANCED FIRE SAFETY**

(30) Priority: 24.08.2022 KR 20220106396
(71) Applicant: LG Energy Solution, Ltd., Seoul 07335 (KR)
(72) Inventor: JANG, Sung-Hwan, Daejeon 34122 (KR); PARK, Myung-Ki, Daejeon 34122 (KR); SEONG, Jun-Yeob, Daejeon 34122 (KR)
(74) Representative: Plasseraud IP
(86) International application number: PCT/KR2023/010688
(87) International publication number: WO 2024/043548

(57) **Abstract**

A battery pack according to the present disclosure includes a pack case including a plurality of module mounting areas divided by partition walls, battery modules each including a sensor member for transmitting a danger signal when a thermal event occurs, the battery modules being respectively located in the plurality of module mounting areas, and a fire extinguishing unit configured to receive the danger signal and supply fire extinguishing water to the module mounting area in which a target battery module transmitting the danger signal among the battery modules is located.

## Description

### TECHNICAL FIELD

The present disclosure relates to a battery pack, and more particularly, to a battery pack that may suppress, when a thermal event occurs in a specific battery module included in the battery pack, ignition of the specific battery module without causing damage to other surrounding battery modules.

The present application claims priority to Korean Patent Application No. 10-2022-0106396 filed on August 24, 2022 in the Republic of Korea, the present disclosures of which are incorporated herein by reference.

### BACKGROUND ART

Because secondary batteries may radically reduce the use of fossil fuel and do not generate any by-products that come with energy consumption, the secondary batteries are gaining attention as a new alternative energy source for improving eco-friendliness and energy efficiency.

Accordingly, the application of secondary batteries to various devices is increasing. For example, secondary batteries are widely used as energy sources for wireless mobile devices or wearable devices, which are small multifunctional products, and are also used as energy sources for energy storage systems (ESSs) or electric vehicles and hybrid electric vehicles that are suggested as alternatives to existing gasoline vehicles and diesel vehicles.

In general, an operating voltage of one secondary battery is about 2.5 V to 4.5 V. Accordingly, an electric vehicle or an ESS requiring high capacity and high power includes a battery module in which a plurality of secondary batteries are connected in series and/or in parallel and a battery pack in which the battery modules are connected in series and/or in parallel, and uses them as an energy source.

As such, as secondary batteries have been used as high capacity and high power energy sources, ensuring the safety of a battery module/pack has become an important issue.

Because battery modules have recently been designed to intensively accommodate as many secondary batteries as possible to improve energy density, when one of the secondary batteries malfunctions and ignites, thermal runaway that causes chain ignition of other surrounding secondary batteries may easily occur. For this reason, research has recently been active on battery packs including a fire extinguishing system for suppressing ignition of some secondary batteries before the ignition spreads uncontrollably to other secondary batteries or battery modules.

However, a fire extinguishing system of a conventional battery pack often misses the initial golden time to suppress the spread of fire because a time when water is appropriately injected after a flame is generated in a battery module is delayed. As a result, gas and flame may propagate to other surrounding battery modules from the battery module in which the event occurs, and the battery pack may be burnt down or exploded very quickly, increasing the risk of fatal damage to a user.

### DISCLOSURE

### Technical Problem

The present disclosure is designed to solve the problems of the related art, and therefore the present disclosure is directed to providing a battery pack that may suppress ignition of a battery module in which a thermal event occurs by quickly and intensively injecting fire extinguishing water into the target battery module in which the thermal event occurs.

Also, the present disclosure is directed to providing a battery pack that may effectively suppress a thermal runaway chain reaction from a battery module in which a thermal event occurs to other battery modules.

However, technical problems to be solved by the present disclosure are not limited to the above-described technical problems and one of ordinary skill in the art will understand other technical problems from the following description.

### Technical Solution

In one aspect of the present disclosure, there is provided a battery pack including a pack case including a plurality of module mounting areas divided by partition walls, battery modules each including a sensor member for transmitting a danger signal when a thermal event occurs, the battery modules being respectively located in the plurality of module mounting areas, and a fire extinguishing unit configured to receive the danger signal and supply fire extinguishing water to the module mounting area in which a target battery module transmitting the danger signal among the battery modules is located.

The sensor member may include at least one of a temperature sensor for sensing a temperature change of the battery module and a gas sensor for sensing gas generated in the battery module.

The sensor member may be configured to transmit the danger signal to the fire extinguishing unit when a state in which a temperature change rate of the battery module (dT/dt) > 1°C is maintained for 3 seconds or more based on a preset critical temperature.

The fire extinguishing unit may include a fire extinguishing water storage tank located inside or outside the pack case, a plurality of fire extinguishing water supply pipes configured to connect the fire extinguishing water storage tank to the plurality of module mounting areas, and a control unit configured to selectively open only the fire extinguishing water supply pipe connected to the module mounting area in which the target battery module is located based on the danger signal.

The pack case may include a pack tray including a base portion supporting lower portions of the battery modules and a wall portion forming a wall along an outer circumference of the base portion, and a pack cover coupled to the pack tray to cover upper portions of the battery modules.

Each of the plurality of module mounting areas may be provided in the pack tray to surround a circumference of each battery module with each partition wall higher than the battery module.

A path may be formed between the wall portion and the partition wall facing each other, and the fire extinguishing water supply pipe may be located in the path.

The fire extinguishing water supply pipe may include a water injection port at one end, wherein a front portion of the water injection port is inserted into a through-hole formed in the partition wall and a rear portion of the water injection port is fixedly coupled to the partition wall to seal the through-hole.

The battery module may include battery cells and a module case in which the battery cells are accommodated, wherein the module case includes a soft portion with lower mechanical rigidity than other portions at a position facing the front portion of the water injection port.

The soft portion may be thinner than other surrounding portions and may be formed of a non-metallic material.

The module case may include a metal mesh net on at least one of a front side and a rear side of the soft portion.

The battery module may include battery cells and a module case in which the battery cells are accommodated, wherein the module case includes a water injection hole in an upper portion covering upper portions of the battery cells, wherein the water injection hole and the water injection port are connected to each other by an extension hose inside the module mounting area.

The base portion may include a cooling unit in which cooling water flows, wherein the cooling unit includes a plurality of area cooling pipes located at positions respectively corresponding to lower portions of the plurality of module mounting areas; and a coolant control valve configured to control a flow rate of each of the plurality of area cooling pipes.

The coolant control valve may be configured to be selectively opened or closed based on a danger signal generated from the sensor member, to increase a flow rate of cooling water in the area cooling pipes corresponding to the module mounting areas in which other battery modules adjacent to the target battery module are located.

In another aspect of the present disclosure, there is provided a battery pack including a pack case including a plurality of module mounting areas divided by partition walls, battery modules each including a sensor member for transmitting a danger signal when a thermal event occurs, the battery modules being respectively located in the plurality of module mounting areas, and a cooling unit configured to selectively cool only the module mounting areas in which other battery modules adjacent to a target battery module transmitting the danger signal among the battery modules are located.

The pack case may include a pack tray including a base portion supporting lower portions of the battery modules and a wall portion forming a wall along an outer circumference of the base portion, wherein the cooling unit is provided inside the base portion, and includes a plurality of area cooling pipes that are located at positions respectively corresponding to lower portions of the plurality of module mounting areas and in which cooling water flows, and a coolant control valve configured to control a flow rate of each of the plurality of area cooling pipes.

The coolant control valve may be configured to be selectively opened or closed based on a danger signal generated from the sensor member, to increase a flow rate of cooling water in the area cooling pipes corresponding to the module mounting areas in which other battery modules adjacent to the target battery module are located.

The battery pack may further include a cooling chiller configured to supply cooling water to the area cooling pipe, wherein the cooling chiller includes a control unit configured to receive a danger signal from the sensor member and selectively open or close the cooling control valve.

In another aspect of the present disclosure, there is provided a battery pack including a pack case including a plurality of module mounting areas divided by partition walls, battery modules each including a sensor member for transmitting a danger signal when a thermal event occurs, the battery modules being respectively located in the plurality of module mounting areas, and a cooling unit configured to cool all of the plurality of module mounting areas based on the danger signal generated from at least one battery module.

In another aspect of the present disclosure, there is provided a vehicle including the battery pack.

### Advantageous Effects

According to one aspect of the present disclosure, there may be provided a battery pack that may prevent gas and flame from propagating to other surrounding battery modules by quickly and intensively injecting fire extinguishing water into a target battery module in which a thermal event occurs.

In particular, according to the present disclosure, because, before ignition of a target battery module in which a thermal event occurs intensifies, the target battery module is submerged by injecting fire extinguishing water to a module mounting area in which the target battery module is accommodated, the ignition may be suppressed and thermal runaway propagation to other battery modules may be more reliably prevented.

Also, according to one aspect of the present disclosure, because fire extinguishing water is not injected into a module mounting area in which a battery module with no danger signal is accommodated, battery modules other than a target battery module do not suffer submersion damage. Accordingly, the battery modules other than the target battery module may be reused.

Also, according to one aspect of the present disclosure, because battery modules around a battery module in which a thermal event occurs may be intensively cooled, a thermal runaway chain reaction may be effectively suppressed.

Also, according to one aspect of the present disclosure, because when a thermal event occurs inside a battery pack, all battery modules may be cooled based on a danger signal of a sensor member, a thermal runaway chain reaction may be effectively suppressed.

The effects of the present disclosure are not limited to the effects mentioned above, and other effects not mentioned will be clearly understood by one of ordinary skill in the art from the specification and the attached drawings.

### DESCRIPTION OF DRAWINGS

FIG. 1 is a schematic perspective view illustrating a battery pack according to an embodiment of the present disclosure.
FIG. 2 is a perspective view schematically illustrating a configuration of a battery pack according to an embodiment of the present disclosure.
FIG. 3 is a view schematically illustrating a battery pack, as an alternative to the battery pack of FIG. 2, in which a fire extinguishing unit is located inside the pack case.
FIG. 4 is a plan view illustrating a portion of a battery pack according to an embodiment of the present disclosure.
FIG. 5 is a cross-sectional view illustrating a portion of a battery pack according to an embodiment of the present disclosure.
FIG. 6 is a view illustrating a metal mesh net of FIG. 5.
FIG. 7 is a view corresponding to FIG. 5, schematically illustrating a structure for fire extinguishing water injection applied to a battery pack according to another embodiment of the present disclosure.
FIGS. 8 and 9 are reference views for describing a fire extinguishing system of a battery pack according to an embodiment of the present disclosure.
FIG. 10 is a view schematically illustrating a configuration of a cooling unit provided inside a base portion of a pack tray in a battery pack according to still another embodiment of the present disclosure.
FIG. 11 is a reference view for describing a cooling system according to the battery pack of FIG. 10.
FIG. 12 is a reference view for describing a cooling system of a battery pack according to still another embodiment of the present disclosure.
FIG. 13 is a view schematically illustrating a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

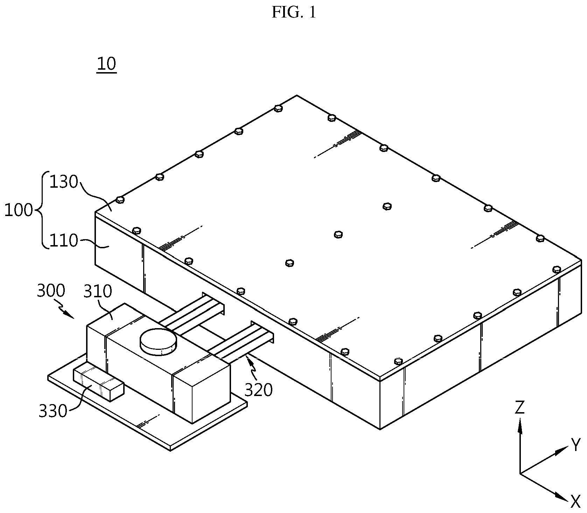

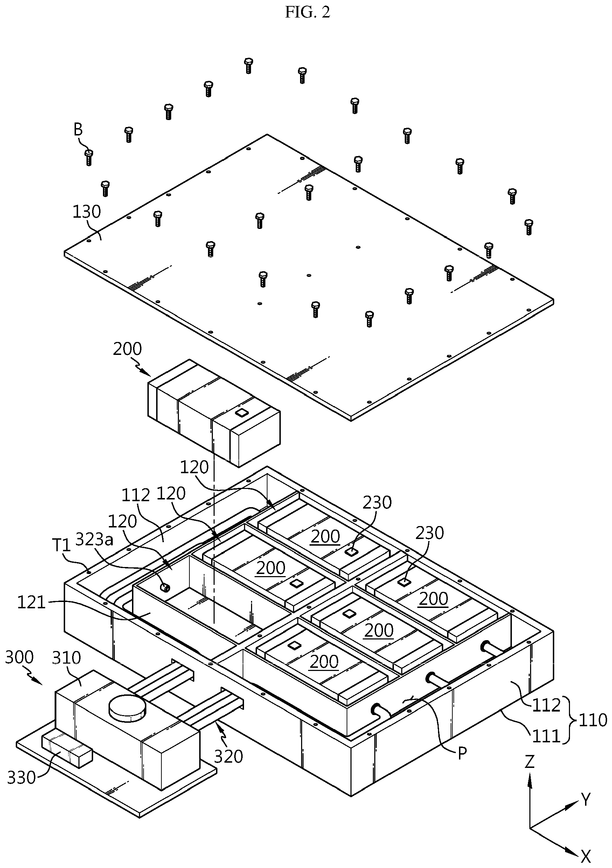

FIG. 1 is a schematic perspective view illustrating a battery pack according to an embodiment of the present disclosure. FIG. 2 is a perspective view schematically illustrating a configuration of a battery pack according to an embodiment of the present disclosure.

A battery pack 10 according to an embodiment of the present disclosure includes a pack case 100 including a plurality of module mounting areas 120, battery modules 200 respectively located in the module mounting areas 120, and a fire extinguishing unit 300 for injecting fire extinguishing water when ignition of the battery modules 200 occurs.

The pack case 100 may have an empty inner space in which the plurality of battery modules 200 are accommodated. For example, the pack case 100 may include a pack tray 110 and a pack cover 130, as shown in FIGS. 1 and 2. The pack tray 110 may be provided in a box shape with an open top, and the battery modules 200 may be accommodated in an inner space of the pack tray 110. In more detail, the pack tray 110 may include a base portion 111 supporting lower portions of the battery modules 200 and a wall portion 112 forming a wall along an outer circumference of the base portion 111. The pack cover 130 may be coupled to the pack tray 110 by being bolted to a fastening groove T1 formed in an upper end of the wall portion 112 of the pack tray 110, and may be provided in a cover shape to cover upper portions of all of the battery modules 200.

Also, the pack case 100 may include the module mounting areas 120 therein. For example, as in an embodiment of FIG. 2, six module mounting areas 120 divided by partition walls 121 may be provided inside the pack tray 110, and at least one battery module 200 may be located in each module mounting area 120. In each module mounting area 120, a circumference of each battery module 200 may be surrounded by the partition wall 121 higher than the battery module 200.

For reference, although not shown for convenience of illustration, the battery modules 200 may be electrically connected to each other by using a component such as a flexible bus bar (not shown), and the flexible bus bar may pass through the partition wall 121. The battery pack 10 may include less than 5 or more than 7 battery modules 200 according to the electric capacity or output required by the battery pack 10, and the size of the pack case 100 or the number of module mounting areas 120 may be accordingly determined.

The pack cover 130 and the partition wall 121 may be configured so that an upper end of the partition wall 121 contacts an inner surface of the pack cover 130. In this case, like in an upper end of the pack tray 110, a fastening groove `T1' may also be formed in the upper end of the partition wall 121, as shown in FIG. 2. In this case, when the pack tray 110 and the pack cover 130 are coupled to each other, not only an outer edge of the pack cover 130 but also a central portion of the pack cover 130 may be bolted, and thus, fixability between the pack cover 130 and the pack tray 110 may be improved. Also, because an upper portion of each module mounting area 120 may be more closely shielded by the pack cover 130, airtightness of the module mounting areas 120 may be increased.

According to the configuration of the present disclosure, because the battery modules 200 are respectively located in the module mounting areas 120 divided by the partition walls 121, even when ignition occurs in a specific battery module 200, other battery modules 200 may be protected from gas or frame generated in the specific battery module 200.

The battery module 200 may be an energy storage body in which a plurality of battery cells 210 are electrically connected in order to have a pre-determined capacity and output. The battery module 200 may include the battery cells 210, a component such as a bus bar for electrically connecting the battery cells 210, a component for sensing a voltage of the battery cells 210, and a module case 220 in which the components including the battery cells 210 may be integrally accommodated.

The battery cell 210 may be any type of battery cell 210 known at the time of filing the present application. For example, any type of battery cell 210 such as a substantially cylindrical or prismatic battery cell 210 in which an electrode assembly and an electrolyte are sealed with a metal can-type casing or a plate-shaped pouch-type battery cell 210 in which an electrode assembly and an electrolyte are sealed with a pouch-type casing may be applied to the battery module 200.

The module case 220 is a structure for supporting the battery cells 210 and protecting the battery cells 210 from external impact, etc. and may be formed of a material with high mechanical rigidity. In the present embodiment, the module case 220 may be provided in a substantially rectangular box shape including four side portions 221 covering front, rear, left, and right sides of the battery cells 210 and an upper portion 222 and a lower portion covering upper and lower portions of the battery cells 210.

In particular, the battery module 200 according to an embodiment of the present disclosure includes a sensor member 230. The sensor member 230 may include at least one of a temperature sensor for sensing a temperature change of the battery module 200 and a gas sensor for sensing gas generated in the battery module 200.

The sensor member 230 may be attached the inside or outside of the module case 220. Also, the sensor member 230 may be configured to wirelessly transmit a danger signal to an external device of the fire extinguishing unit 300 when a thermal event occurs in the battery module 200. The external device refers to a control unit 330 of the fire extinguishing unit 300. The external device may include, for example, an electronic control unit (ECU) of an electric vehicle in which the battery pack 10 of the present disclosure is mounted. In this case, a warning sound and a warning message may be output from a display in the vehicle by the ECU based on the danger signal, allowing a driver to respond quickly.

The fire extinguishing unit 300 is configured to receive a danger signal from the sensor member 230 and supply fire extinguishing water to the module mounting area 120 in which a target battery module 200 in which a thermal event occurs is located.

The fire extinguishing unit 300 may include a fire extinguishing water storage tank 310, a plurality of fire extinguishing water supply pipes 320, and the control unit 330, as shown in FIG. 2.

The fire extinguishing water storage tank 310 may contain fire extinguishing water therein, and may be located inside or outside the pack case 100. For example, the fire extinguishing water storage tank 310 may be provided outside the pack case 100 as shown in FIG. 2, and in this case, the fire extinguishing water supply pipe 320 may extend from the fire extinguishing water storage tank 310 through the pack case 100 to each module mounting area 120 inside the pack case 100.

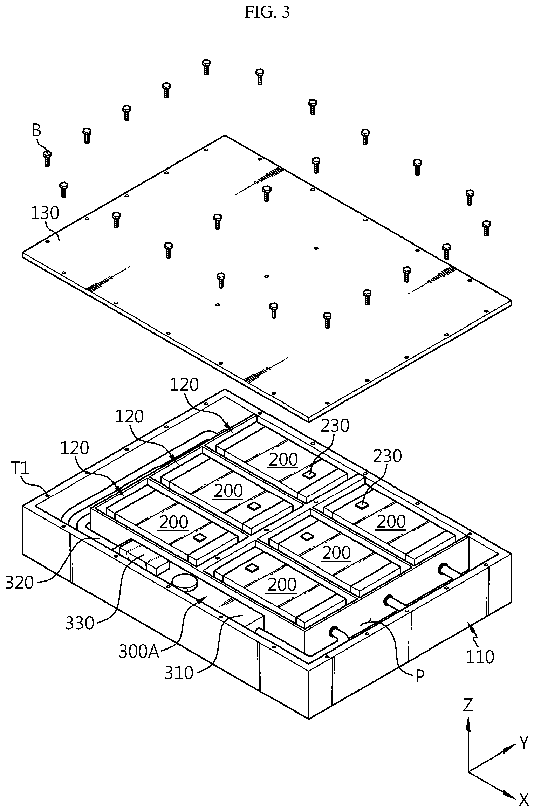

A fire extinguishing unit 300A according to an embodiment of FIG. 3 is an alternative to the fire extinguishing unit 300 according to an embodiment of FIG. 2, and the fire extinguishing water storage tank 310 and the control unit 330 may be provided inside the pack case 100. That is, the fire extinguishing unit 300A may be integrally accommodated inside the pack case 100.

The fire extinguishing water storage tank 310 may include water supply pump (not shown) and a control valve (not shown), and may be configured to selectively supply extinguishing water to the plurality of fire extinguishing water supply pipes 320. For example, when a danger signal is received from a certain module mounting area 120, the control valve may operate to open a specific fire extinguishing water supply pipe 320 connected to the certain module mounting area 120 and the water supply pump may operate to supply fire extinguishing water to the specific fire extinguishing water supply pipe 320. As an alternative to the water supply pump, a nitrogen tank (not shown) may be connected to the fire extinguishing water storage tank 310. For example, when a danger signal is received, a valve of the nitrogen tank may be opened to spray nitrogen into the fire extinguishing water storage tank 310, and in this case, due to pressure of the nitrogen gas, fire extinguishing water may be supplied from the fire extinguishing water storage tank 310 to the fire extinguishing water supply pipe 320.

The control unit 330 may be configured to control opening/closing of, for example, the water supply pump, the valve of the nitrogen tank, or the control valve. Also, the control unit 330 may be configured to control fire extinguishing water to be supplied from the fire extinguishing water storage tank 310 by selectively opening only the fire extinguishing water supply pipe 320 connected to the module mounting area 120 in which a target battery module 120 is located based on a danger signal received from the sensor member 230. The control unit 330 may selectively include any of a processor, an application-specific integrated circuit (ASIC), another chipset, a logic circuit, a register, a communication modem, and a data processing device, known in the art.

Referring to FIGS. 2 to 4, the fire extinguishing water supply pipe 320 may have one end connected to the fire extinguishing water storage tank 310 and the other end connected to the corresponding module mounting area 120. In particular, in the battery pack 10 according to the present embodiment, a path P may be formed between the wall portion 112 and the partition wall 121 facing each other inside the pack case 100, and the fire extinguishing water supply pipe 320 may be located along the path P. Although widths of the fire extinguishing water supply pipe 320 and the path P are greater than those of surrounding components in the drawings of the present embodiment in order to highlight main components, the path may be designed to about 10 cm or less, and the fire extinguishing water supply pipes 320 may overlap in an up-down direction (±Z direction) rather than a left-right direction (±X direction) in the path P. Accordingly, the battery pack 10 may be light and slim.

In more detail, in the battery pack 10, as shown in FIG. 2, six battery modules may be accommodated in three rows and two columns in six module mounting areas 120 to be spaced apart from each other, and the fire extinguishing water storage tank 310 may be located in front (-Y direction) of the six module mounting areas 120. Six fire extinguishing water supply pipes 320 may be used to connect the fire extinguishing water storage tank 310 to the six module mounting areas 120. For example, the battery modules 200 may be accommodated one by one in three module mounting areas 120 located on the left side of the fire extinguishing water storage tank 310, and the fire extinguishing water supply pipes 320 are connected one by one. The battery modules 200 may also be accommodated one by one in three module mounting areas 120 located on the right side of the fire extinguishing water storage tank 310, and the fire extinguishing water supply pipes 320 are connected one by one.

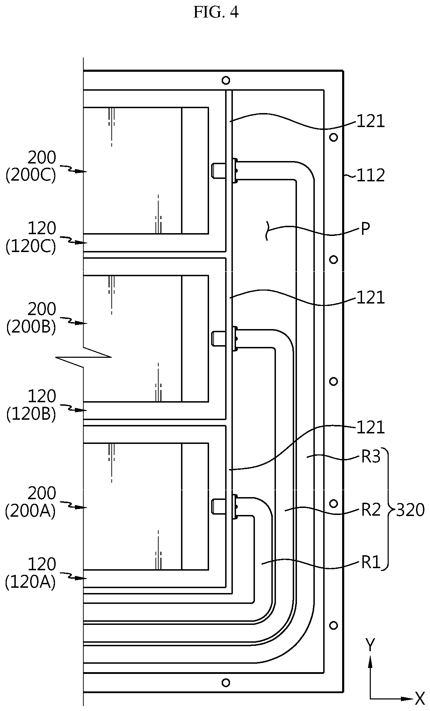

In more detail, as shown in FIG. 4, battery modules 200A, 200B, 200C are respectively accommodated in a right first module mounting area 120A closest to the fire extinguishing water storage tank 310, a right second module mounting area 120B, and a right third module mounting area 120C. A right first fire extinguishing water supply pipe 320 indicated by 'R I' is connected to the right first module mounting area 120A, a right second fire extinguishing water supply pipe 320 indicated by `R2' is connected to the right second module mounting area 120B, and a right third fire extinguishing water supply pipe 320 indicated by 'R3' is connected to the right third module mounting area 120C. In this way, three module mounting areas 120 located on the left side may also be respectively connected to the fire extinguishing water supply pipes 320.

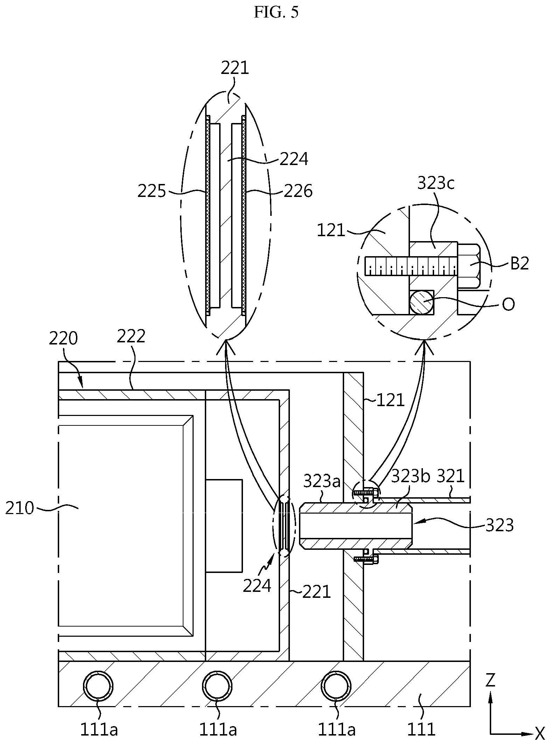

Also, referring to FIG. 5, the fire extinguishing water supply pipe 320 may include a pipe hose 321 and a water injection port 323 press-fitted into the pipe hose 321.

A shape or a material of the pipe hose 321 is not limited, but the pipe hose 321 may preferably include a heat-resistant and flexible material such as silicone.

The water injection port 323 may be formed of a metallic or non-metallic material with high mechanical rigidity, and may be partially inserted into the module mounting area 120 and may be firmly fixedly coupled to the partition wall 121. That is, as shown in FIG. 5, a front portion 323a of the water injection port 323 may be inserted into a through-hole formed in the partition wall 121 and a rear portion 323b of the water injection port 323 may be fixedly coupled to the partition wall 121 to seal the through-hole.

A flange portion 323c whose insertion into the through-hole is limited may be provided on the rear portion 323b of the water injection port 323, and the flange portion may be fixed to the partition wall 121 by a bolt B2. Also, as shown in an enlarged view of FIG. 5, the flange portion 323c may include a groove formed near a head of the bolt B2, and an O-ring formed of a rubber material may be inserted into the groove. According to this configuration, the water injection port 323 may be airtightly and firmly mounted on the partition wall 121, and the water injection port 323 may not be separated from the partition wall 121 even under high water pressure, and thus, fire extinguishing water may be stably injected into the module mounting area 120. Accordingly, the fire extinguishing water may be filled in the module mounting area 120, to submerge the battery module 200 and suppress ignition.

Referring back to FIG. 5, the module case 220 of the battery module 200 according to an embodiment of the present disclosure includes a soft portion at a position facing the front portion 323a of the water injection port 323. The soft portion 224 is a portion with lowest mechanical rigidity in the module case. The soft portion 224 may be thinner than surrounding portions and may be formed of a non-metallic material. For example, the soft portion 224 may be formed of a plastic material that may be broken or melted when a certain water pressure or heat and gas pressure is applied.

As such, when a portion of the module case 220 facing the front portion 323a of the water injection port 323 is the soft portion 224, the soft portion 224 may be broken by water pressure. Accordingly, a hole may be formed in the side portion 221 of the module case 220, and fire extinguishing water may be directly injected into the battery module 200 through the hole. Because fire extinguishing water may be more rapidly filled in an inner space of the module case 220, ignition of the battery module 200 may be more effectively suppressed.

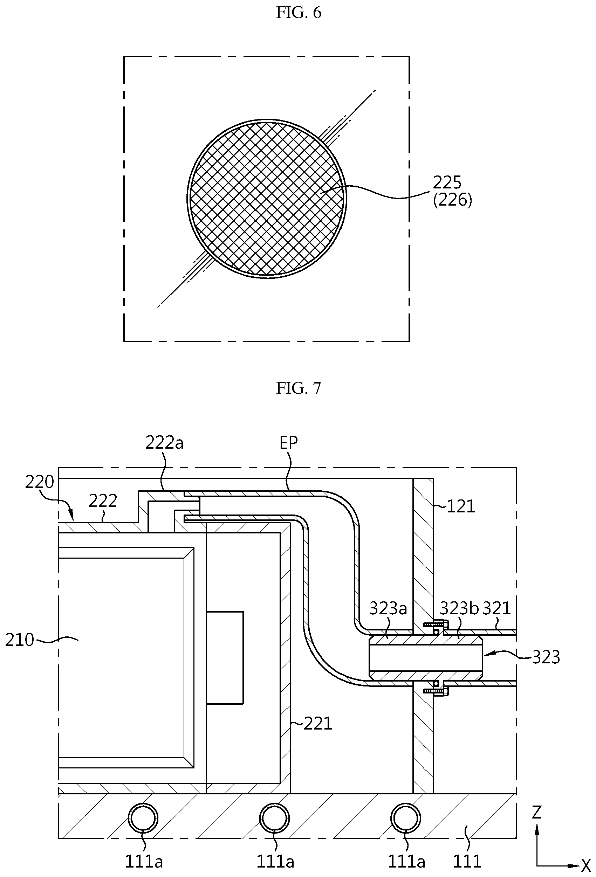

Also, referring to the enlarged view of FIG. 5 and FIG. 6, the module case 220 of the battery module 200 includes a metal mesh net 225, 226 on at least one of a front side and a rear side of the soft portion 224. The metal mesh net 225, 226 may prevent, when gas, flame, and sparks are ejected from the battery cells 210 and the soft portion 224 is broken, the flame or sparks from being easily discharged from the module case 220 to the outside so that the flame or sparks do not scatter in the module mounting area 120 and thermal damage to the water injection port 323 is avoided. The sparks refer to a high-temperature electrode plate piece or an electrode active material detached from the electrode assembly inside the battery cell 210.

FIG. 7 is a view corresponding to FIG. 5, schematically illustrating a structure for fire extinguishing water injection applied to the battery pack 10 according to another embodiment of the present disclosure.

The same members as those in the above embodiment are denoted by the same reference numerals, a repeated description of the same members will be omitted, and a difference from the above embodiment will be mainly described.

The module case 220 of the battery module 200 according to another embodiment of the present disclosure includes a water injection hole 222a in the upper portion 222 covering upper portions of the battery cells 210, as shown in FIG. 7. Also, an extension hose EP for connecting the water injection hole 222a to the water injection port 323 is further provided inside the module mounting area 120.

According to the embodiment of FIG. 7, fire extinguishing water may be directly injected into the module case 220 through the water injection hole 222a formed in the upper portion 222 of the module case 220. The above embodiment has an advantage in that fire extinguishing water may be injected into the module case 220 through a hole formed after the soft portion 224 is broken, but has a problem in that, when the hole is formed in the side portion 221 of the module case 220 and a water level inside the module case 220 rises, fire extinguishing water may be discharged back to the outside of the module case 220 through the hole. However, the configuration of the present embodiment may solve the problem by injecting fire extinguishing water into the module case 220 through the water injection hole 222a formed in the upper portion 222 of the module case 220.

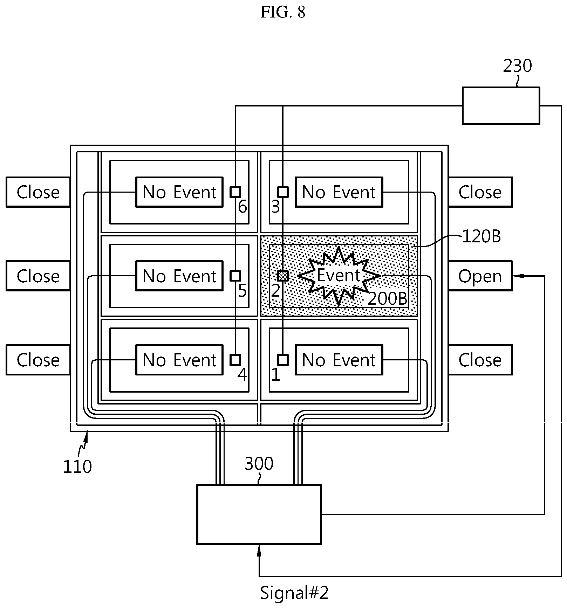

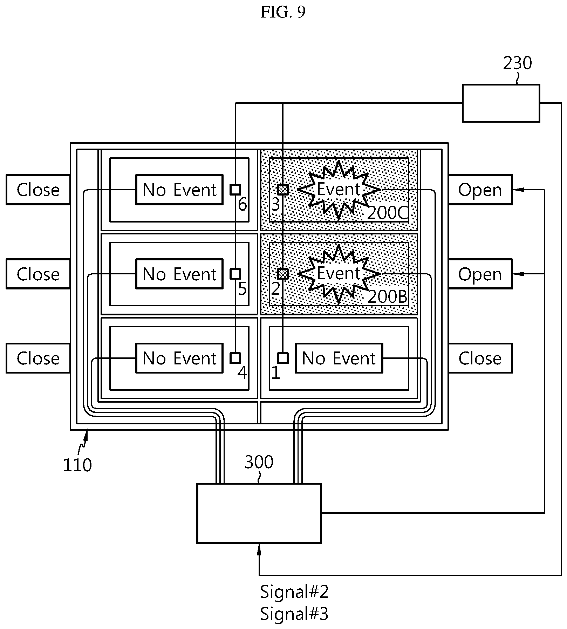

FIGS. 8 and 9 are reference views for describing a fire extinguishing system of the battery pack 10 according to an embodiment of the present disclosure.

Next, the fire extinguishing system of the battery pack 10 according to the present disclosure will be briefly described, with reference to FIGS. 8 and 9.

For example, as shown in FIG. 8, when a thermal event occurs in right second battery module 200, the sensor member 230 of the corresponding battery module 200 transmits a danger signal to the control unit 330 of the fire extinguishing unit 300. That is, in FIG. 8, a danger signal is generated in a second sensor member 230 and is transmitted to the control unit 330 of the fire extinguishing unit 300.

In this case, the sensor member 230 may be configured to transmit the danger signal to the fire extinguishing unit 300 when a state in which a temperature change rate of the battery module 200 (dT/dt) > 1°C is maintained for 3 seconds or more based on a preset critical temperature. The preset critical temperature may refer to a highest value within a temperature range of the battery module 200 that may be considered normal when the battery cells 210 are charged and discharged.

When a state in which the temperature change rate of the battery module 200 (dT/dt) > 1°C is maintained for 3 seconds or more based on the preset critical temperature, the risk of ignition of the battery module 200 increases as time passes. Accordingly, the sensor member 230 may be configured to transmit a danger signal to the fire extinguishing unit 300 when the above condition is satisfied so that fire extinguishing water is preemptively injected immediately before ignition of the battery module 200.

Based on the danger signal of the second sensor member 230, the control unit 330 of the fire extinguishing unit 300 may operate to selectively open only the right second fire extinguishing water supply pipe 320 indicated by 'R2' of FIG. 6 from among the six fire extinguishing water supply pipes 320 and inject fire extinguishing water of the fire extinguishing water storage tank 310 into the module mounting area 120 in which the target battery module 200, that is, the right second battery module 200B is located.

Accordingly, as the target battery module 200 of the module mounting area 120 is submerged, ignition may be suppressed and gas and flame propagation to other surrounding battery modules 200 may be prevented. Also, because fire extinguishing water is not injected into the module mounting areas 120 in which other battery modules 200 are accommodated, the battery modules 200 other than the target battery module 200B may not suffer submersion damage.

When danger signals are simultaneously generated in the second sensor member 230 of the right second battery module 200B and the third sensor member 230 of the third battery module 200C as shown in FIG. 9, the danger signals of the second sensor member 230 and the third sensor member 230 may be transmitted to the control unit 330 of the fire extinguishing unit 300. In this case, the control unit 330 of the fire extinguishing unit 300 may selectively open, based on the two danger signals, only the right second fire extinguishing water supply pipe 320 indicated by 'R2' and the right third fire extinguishing water supply pipe 320 indicated by 'R3' from among the six fire extinguishing water supply pipes 320, and inject fire extinguishing water into the module mounting areas 120 in which the right second battery module 200B and the right third battery module 200C are respectively located. Accordingly, the fire extinguishing water may be filled in the module mounting areas 120 to suppress ignition of the target battery modules 200B, 200C.

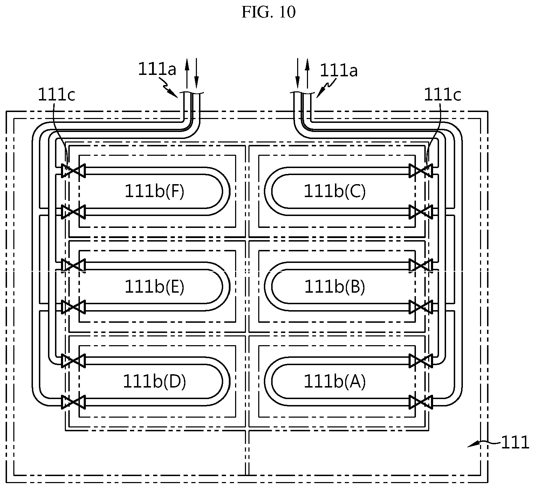

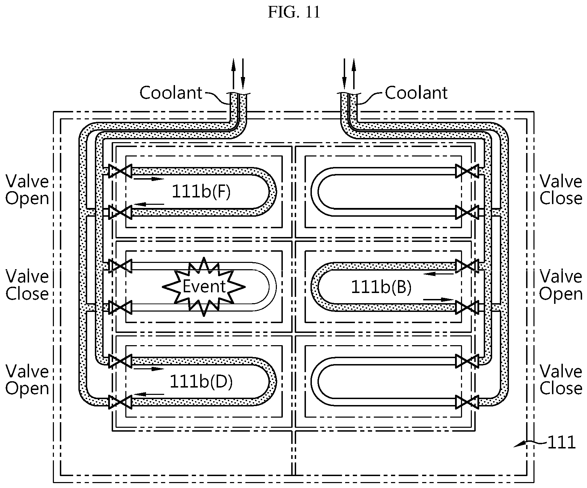

FIG. 10 is a view schematically illustrating a configuration of a cooling unit 111a provided inside the base portion 111 of the pack tray 110 in the battery pack 10 according to still another embodiment of the present disclosure. FIG. 11 is a reference view for describing a cooling system according to the battery pack 10 of FIG. 10.

The pack tray 110 of the battery pack 10 according to still another embodiment of the present disclosure includes the cooling unit 111a in which cooling water may flow. The cooling unit 111a may be received in the base portion 111 of the pack tray 110.

For example, the cooling unit 111a may include a plurality of area cooling pipes 111b(A) to 111b(F) located at positions corresponding to lower portions of the module mounting areas 120 and a coolant control valve 111c for controlling a flow rate of each area cooling pipe 111b, as shown in FIG. 10.

Also, the cooling unit 111a may be configured to selectively cool only the module mounting areas 120 in which other battery modules adjacent to a target battery module transmitting a danger signal among the battery modules 200 are located.

For example, the cooling unit 111a according to the present embodiment include six area cooling pipes 111b(A) to 111b(F), and each of the six area cooling pipes 111b(A) to 111b(F) is received in the base portion 111 located under the six module mounting areas 120. Cooling water is supplied to the area cooling pipes 111b(A) to 111b(F) to cool the module mounting areas 120 and absorb heat of the battery modules 200.

The cooling unit 111a may be connected to a cooling chiller (not shown) provided outside the pack case 100. Cooling water may circulate by absorbing heat of the battery module 200 in the pack tray 110, being warmed, being cooled by the cooling chiller, and returning back to the pack tray 110. The cooling chiller refers to a device for removing heat from cooling water.

The cooling unit 111a according to still another embodiment of the present disclosure may be configured to allow cooling water to flow through all of the area cooling pipes 111b in normal times, that is, when there is no danger signal from the sensor member 230. However, the cooling unit 111a may be configured to, when a danger signal is generated from the sensor member 230, transmit the danger signal to a control unit (not shown) provided in the cooling chiller, control the control unit to selectively open the coolant control valve 111c based on the danger signal, and increase a flow rate of cooling water in the area cooling pipes 111b under the module mounting areas 120 adjacent to the module mounting area 120 of the target battery module 200. Accordingly, when a thermal event occurs, a flow rate of cooling water may be concentrated in a specific area cooling pipe 111b.

For example, as shown in FIG. 11, when a thermal event occurs in a left second battery module 200 and a danger signal is generated from a fifth sensor member 230, the control unit 330 may selectively open/close the coolant control valve 111c based on the danger signal, to increase a flow rate of cooling water in the area cooling pipes 111b(B), 111b(D), and 111b(F) for cooling other battery modules 200 adjacent to the left second battery module 200. That is, in FIG. 11, the coolant control valves 111c of the area cooling pipes 111b 111b(B), 111b(D), and 111b(F) are opened, and the coolant control valves 111c of the remaining area cooling pipes 111b are closed. Accordingly, cooling water may circulate only in the area cooling pipes 111b(B), 111b(D), and 111b(F) in FIG. 11 to intensively cool the module mounting areas 120 and the battery modules 200 located over the area cooling pipes 111b.

For reference, when the pack tray 110 is continuously exposed to high-temperature gas and flame during ignition of the battery module 200, the battery modules 200 adjacent to the battery module 200 in which an event occurs may be thermally affected by accumulated heat, and when it gets worse, the risk of an ignition chain reaction of the surrounding battery modules 200 increases. However, according to the cooling system according to the present disclosure, because surroundings of the battery module 200 in which an event occurs may be intensively cooled, propagation of heat to the surroundings from the battery module 200 in which the event occurs may be prevented and the structural collapse of the pack case 100 due to heat may be effectively prevented.

The cooling unit 111a may be included in the battery pack including the fire extinguishing unit 300. That is, the battery pack 10 according to the present disclosure may include both the fire extinguishing unit 300 and the cooling unit 111a. In this case, when a thermal event occurs in some battery modules 200 included in the battery pack 10, ignition of the battery modules may be quickly suppressed and thermal runaway to other surrounding battery modules may be effectively prevented.

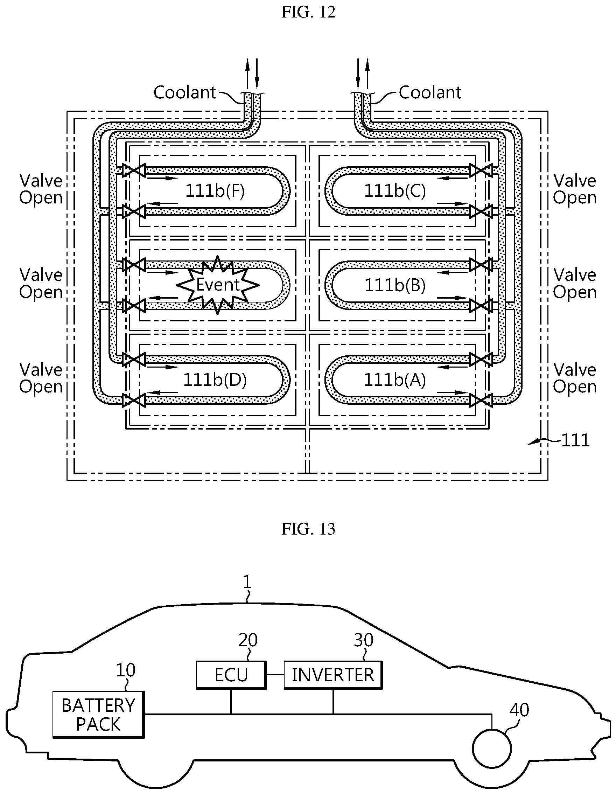

FIG. 12 is a reference view for describing a cooling system of a battery pack according to still another embodiment of the present disclosure.

The battery pack according to still another embodiment of the present disclosure includes the same main components as the battery pack according to an embodiment of FIG. 10, but is different in that the cooling unit 111a is configured to cool all battery modules when a risk of internal ignition of the battery pack is detected.

For example, as shown in FIG. 12, the battery pack according to still another embodiment of the present disclosure may be configured to, when a danger signal is generated from the sensor member 230 of at least one battery module 200, allow cooling water to flow through the area cooling pipes 11 1b(A) to 11 1b(F) corresponding to all of the module mounting areas 120 based on the danger signal.

In this case, a thermal runaway chain reaction from a battery module in which a thermal event occurs to other battery modules may be suppressed and an ignition speed of the battery module in which the event occurs may be significantly delayed. Accordingly, a driver of an electric vehicle including the battery pack may detect a fire issue in the battery pack and may have a sufficient time to evacuate to a safe place or take necessary measures.

Next, a vehicle according to the present disclosure will be briefly described with reference to FIG. 13.

FIG. 13 is a view schematically illustrating a vehicle including the battery pack 10 according to an embodiment of the present disclosure.

Referring to FIG. 13, a vehicle 1 according to the present disclosure may include the battery pack 10 according to an embodiment of the present disclosure, an electronic control unit (ECU) 20, an inverter 30, and a motor 40. Preferably, the vehicle 1 may be an electric vehicle.

The battery pack 10 may be used as an electric energy source for driving the vehicle 1 by providing a driving force to the motor 40. The battery pack 10 may be charged or discharged by the inverter 30 according to an operation of the motor 40 and/or an internal combustion engine (not shown). The battery pack 10 may be charged by a regenerative charging device coupled to a brake. The battery pack 10 may be electrically connected to the motor 40 of the vehicle through the inverter 30.

The ECU 20 is an electronic control device for controlling a state of the vehicle 1. For example, the ECU 20 may determine torque information based on information such as accelerator, brake, and speed, and controls an output of the motor 40 to match the torque information. Also, the ECU 20 transmits a control signal to the inverter 30 so that the battery pack 10 is charged or discharged based on state information such as state of charge (SOC) or state of health (SOH) of the battery pack 10 received from a battery management system (BMS). The inverter 30 enables the battery pack 10 to be charged or discharged based on the control signal of the ECU 20. The motor 40 drives the vehicle 1 based on control information (e.g., the torque information) transmitted from the ECU 20 by using electric energy of the battery pack 10.

As described above, the battery pack 10 may appropriately maintain a temperature of the battery module 200 in normal times, and when a thermal event occurs in the battery module 200, may quickly submerge the battery module 200 in which the thermal event occurs to suppress a fire. Accordingly, even when a problem occurs in the battery pack 10 while the vehicle 1 is driven, safety is maintained.

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims.

Also, it will be understood by one of ordinary skill in the art that when terms indicating directions such as upper, lower, left, and right are used, these terms are only for convenience of explanation and may vary according to a position of a target object, a position of an observer, etc.

## Claims

1. A battery pack comprising:
a pack case comprising a plurality of module mounting areas divided by partition walls;
battery modules each comprising a sensor member for transmitting a danger signal when a thermal event occurs, the battery modules being respectively located in the plurality of module mounting areas; and
a fire extinguishing unit configured to receive the danger signal and supply fire extinguishing water to the module mounting area in which a target battery module transmitting the danger signal among the battery modules is located.

2. The battery pack according to claim 1, wherein the sensor member comprises at least one of a temperature sensor for sensing a temperature change of the battery module and a gas sensor for sensing gas generated in the battery module.

3. The battery pack according to claim 1, wherein the sensor member is configured to transmit the danger signal to the fire extinguishing unit when a state in which a temperature change rate of the battery module (dT/dt) > 1°C is maintained for 3 seconds or more based on a preset critical temperature.

4. The battery pack according to claim 1, wherein the fire extinguishing unit comprises:
a fire extinguishing water storage tank located inside or outside the pack case;
a plurality of fire extinguishing water supply pipes configured to connect the fire extinguishing water storage tank to the plurality of module mounting areas; and
a control unit configured to selectively open only the fire extinguishing water supply pipe connected to the module mounting area in which the target battery module is located based on the danger signal.

5. The battery pack according to claim 4, wherein the pack case comprises:
a pack tray comprising a base portion supporting lower portions of the battery modules and a wall portion forming a wall along an outer circumference of the base portion; and
a pack cover coupled to the pack tray to cover upper portions of the battery modules.

6. The battery pack according to claim 5, wherein each of the plurality of module mounting areas is provided in the pack tray to surround a circumference of each battery module with each partition wall higher than the battery module.

7. The battery pack according to claim 5, wherein a path is formed between the wall portion and the partition wall facing each other, and the fire extinguishing water supply pipe is located in the path.

8. The battery pack according to claim 5, wherein the fire extinguishing water supply pipe comprises a water injection port at one end,
wherein a front portion of the water injection port is inserted into a through-hole formed in the partition wall and a rear portion of the water injection port is fixedly coupled to the partition wall to seal the through-hole.

9. The battery pack according to claim 8, wherein the battery module comprises battery cells and a module case in which the battery cells are accommodated,
wherein the module case comprises a soft portion with lower mechanical rigidity than other portions at a position facing the front portion of the water injection port.

10. The battery pack according to claim 9, wherein the soft portion is thinner than other surrounding portions and is formed of a non-metallic material.

11. The battery pack according to claim 9, wherein the module case comprises a metal mesh net on at least one of a front side and a rear side of the soft portion.

12. The battery pack according to claim 8, wherein the battery module comprises battery cells and a module case in which the battery cells are accommodated,
wherein the module case comprises a water injection hole in an upper portion covering upper portions of the battery cells,
wherein the water injection hole and the water injection port are connected to each other by an extension hose inside the module mounting area.

13. The battery pack according to claim 5, wherein the base portion comprises a cooling unit in which cooling water flows,
wherein the cooling unit comprises:
a plurality of area cooling pipes located at positions respectively corresponding to lower portions of the plurality of module mounting areas; and
a coolant control valve configured to control a flow rate of each of the plurality of area cooling pipes.

14. The battery pack according to claim 13, wherein the coolant control valve is configured to be selectively opened or closed based on a danger signal generated from the sensor member, to increase a flow rate of cooling water in the area cooling pipes corresponding to the module mounting areas in which other battery modules adjacent to the target battery module are located.

15. A battery pack comprising:
a pack case comprising a plurality of module mounting areas divided by partition walls;
battery modules each comprising a sensor member for transmitting a danger signal when a thermal event occurs, the battery modules being respectively located in the plurality of module mounting areas; and
a cooling unit configured to selectively cool only the module mounting areas in which other battery modules adjacent to a target battery module transmitting the danger signal among the battery modules are located.

16. The battery pack according to claim 15, wherein the pack case comprises a pack tray comprising a base portion supporting lower portions of the battery modules and a wall portion forming a wall along an outer circumference of the base portion,
wherein the cooling unit is provided inside the base portion, and comprises:
a plurality of area cooling pipes that are located at positions respectively corresponding to lower portions of the plurality of module mounting areas and in which cooling water flows; and
a coolant control valve configured to control a flow rate of each of the plurality of area cooling pipes.

17. The battery pack according to claim 16, wherein the coolant control valve is configured to be selectively opened or closed based on a danger signal generated from the sensor member, to increase a flow rate of cooling water in the area cooling pipes corresponding to the module mounting areas in which other battery modules adjacent to the target battery module are located.

18. The battery pack according to claim 17, further comprising a cooling chiller configured to supply cooling water to the area cooling pipe,
wherein the cooling chiller comprises a control unit configured to receive a danger signal from the sensor member and selectively open or close the cooling control valve.

19. A battery pack comprising:
a pack case comprising a plurality of module mounting areas divided by partition walls;
battery modules each comprising a sensor member for transmitting a danger signal when a thermal event occurs, the battery modules being respectively located in the plurality of module mounting areas; and
a cooling unit configured to cool all of the plurality of module mounting areas based on the danger signal generated from at least one battery module.

20. A vehicle comprising the battery pack according to any one of claims 1 to 19.
